# EUROPEAN PATENT SPECIFICATION

(11) **EP 3 660 654 B1**
(45) Date of publication and mention of the grant of the patent: **22.11.2023**
(21) Application number: 18838367.3
(22) Date of filing: 28.06.2018
(51) Int. Cl.: G06F 3/12, B05C 5/00, B05C 11/00, B05D 1/26, B05D 3/00, B41J 3/413

(54) **CAN BODY PRINTING SYSTEM, MANAGEMENT DEVICE, AND PROGRAM**
SYSTEM ZUM BEDRUCKEN EINES DOSENKÖRPERS, VERWALTUNGSVORRICHTUNG UND PROGRAMM
SYSTÈME D'IMPRESSION DE CORPS DE BOÎTE, DISPOSITIF DE GESTION ET PROGRAMME

(30) Priority: 26.07.2017 JP 2017144353
(43) Date of publication of application: 03.06.2020
(73) Proprietor: ALTEMIRA Co., Ltd., Tokyo 112-8525 (JP)
(72) Inventor: OJIMA, Shinichi, Tokyo 141-0031 (JP); IKEDA, Kazunori, Tokyo 141-0031 (JP); SUWA, Asumi, Tokyo 112-8525 (JP); MASUDA, Kazuhisa, Tokyo 112-8525 (JP)
(74) Representative: Strehl Schübel-Hopf & Partner
(86) International application number: PCT/JP2018/024622
(87) International publication number: WO 2019/021739

(56) References cited:
- JP-A- 2014 050 786
- JP-A- 2016 032 879
- JP-A- 2016 149 037
- US-A1- 2016 275 326

## Description

### Technical Field

The present invention relates to a can body printing system, a management device and a program.

### Background Art

For example, in a method of manufacturing a can body used for a beverage can described in Patent Document 1, on an outer circumferential surface of a can body that is cylindrically formed by a metal material and has a metal base appearing on the outer circumferential surface, a layer covering the metal base is formed. Further, after forming the layer covering the metal base, an image is formed on the outer circumferential surface of the can body. The cited Document 1 describes that the layer covering the metal base is formed by inkjet printing including plural ink ejection ports, the inkjet printing being capable of controlling whether or not the ink is ejected for each of the ink ejection ports.

### Citation List

### Patent Literature

Patent Document 1: Japanese Patent Application Laid-Open Publication No. 2015-83480

US 2016/275326 A1 discloses a can body printing system for digital watermarking. Another conventional can body printing system is described in EP 3 175 987 A1. US 2016/239242 A1 discloses an industrial distributed printing system.

### Summary of Invention

### Technical Problem

By the way, for example, such as in the case where printing on can bodies is performed in each of plural factories, printed cans are produced by use of plural printing devices installed in different locations in some cases. Conventionally, when printing was performed on can bodies based on a predetermined design image, color-related processing was performed on the design image and printing was performed by use of the processed design image in each of the locations where the printing devices were installed. However, in the case where the color-related processing was performed on the design image in each of the locations where the printing devices were installed, there was a high possibility that variations occurred in designed colors of the printed can in each of the different locations.

An object of the present invention is to suppress occurrence of variations in colors when printing is performed by use of printing devices installed in different locations.

### Solution to Problem

A can body printing system to which the present invention is applied includes the features defined in claim 1. The dependent claims relate to preferred embodiments.

Here, the management device performs image processing about colors for printing the design image on a base metal surface of the can body or a coated surface obtained by performing a predetermined surface treatment on the base metal surface of the can body.

Moreover, the management device creates information about the number of can bodies to be printed by the plural printing devices.

Further, the system also includes plural relay devices provided in the respective different locations, each of the relay devices relaying the management device to the printing device.

The relay device obtains information about the number of can bodies having been printed by the printing device.

Moreover, the system further includes an inspection device inspecting a state of printing on a printed can printed by the printing device, wherein the inspection device obtains the print image data.

Still further, the system also includes plural relay devices provided in the respective different locations, each of the relay devices relaying the management device to the printing device, wherein the inspection device identifies the number of printed cans with printing defects based on read image data obtained by reading the printed can and the print image data, and transmits information about the identified number of printed cans to the relay device.

Moreover, the management device transmits a sample image in a case where the design image is printed on a can body to a client device.

Here, the management device obtains information about color change of the sample image from the client device.

### Advantageous Effects of Invention

According to the present invention, it is possible to suppress occurrence of variations in colors when printing is performed by use of printing devices installed in different locations.

### Brief Description of Drawings

FIG. 1 is an overall view of a can body printing system of Exemplary disclosure 1;
FIG. 2 is a functional block diagram of a host device of the exemplary disclosure;
FIG. 3 is an illustration diagram of a printer device of the exemplary disclosure;
FIG. 4 is a production flowchart of printed cans in each factory;
FIG. 5 is an overall view of a can body printing system of Exemplary embodiment 2; and
FIG. 6 is a diagram showing an example of a hardware configuration of a computer to which the host device is suitably applied.

### Description of Embodiments and Exemplary Disclosures

Hereinafter, exemplary embodiments for putting the present invention into practice and exemplary disclosures useful for understanding the invention will be described with reference to attached drawings.

### <Exemplary disclosure 1>

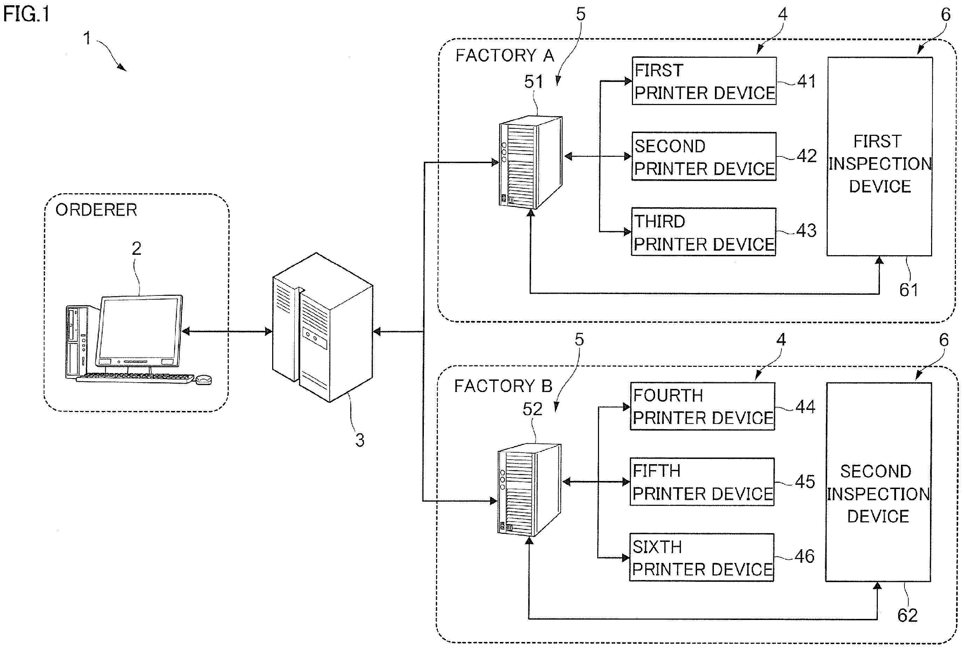

FIG. 1 is an overall view of a can body printing system 1 of Exemplary disclosure 1 which does not form part of the claimed invention.

### [System configuration]

As shown in FIG. 1, in the can body printing system 1, a client device 2 that transmits a design image for performing printing on a can body and a host device 3 that manages plural inkjet printer devices 4, which will be described later, are connected via a network. Further, in the can body printing system 1, the plural inkjet printer devices 4 (hereinafter, referred to as printer devices 4) that perform printing on can bodies and a relay device 5 that relays the host device 3 to the printer devices 4 are connected via the network. Moreover, in the can body printing system 1, an inspection device 6 that inspects the state of printing on a printed can on which printing has been performed by the printer device 4 is connected via the network.

Note that, in the exemplary disclosure, the printer device 4 functions as an example of a printing device and the host device 3 functions as an example of a management device.

Here, the network as an example of a communication line is a communication unit used for information communication among the client device 2, the host device 3, the relay device 5, the printer devices 4 and the inspection device 6. Here, the communication unit is the WAN (Wide Area Network) or the LAN (Local Area Network) system, but the unit is not limited to these systems as long as a system configuration can be achieved. However, the number of client devices 2 of the can body printing system 1 is not limited to one, and plural client devices 2 may be distributed. Moreover, the number of host devices 3 or relay devices 5 is not limited to one, and there may be plural devices in distant places. Further, the can body printing system 1 is assumed to be sufficient if the system includes one or more client devices 2 and the printer devices 4 having functions of network connection and so forth.

Note that, in the exemplary disclosure, a can body before being printed by the printer device 4 is referred to as "unprinted can," and a can body having been printed by the printer device 4 is referred to as "printed can" in some cases. Moreover, in the case where a can is not distinguished depending on whether the can is before or after printing, the can is referred to as "can body" as a matter of convenience.

Moreover, in the exemplary disclosure, description will be given by taking an example in which each of a factory A and a factory B, as plural factories, includes printer devices 4 that are installed to perform printing on the unprinted cans.

Then, in the description of the exemplary disclosure, it is assumed that the client device 2, the host device 3, the factory A and the factory B are located in places that are different and distant from one another.

In the factory A, as the plural printer devices 4, a first printer device 41, a second printer device 42 and a third printer device 43 are installed. In addition, in the factory A, a first relay device 51 that relays the host device 3 and the plural printer devices 4 is installed. Further, in the factory A, a first inspection device 61 that inspects the state of the printed cans is installed.

Moreover, in the factory B, as the plural printer devices 4, a fourth printer device 44, a fifth printer device 45 and a sixth printer device 46 are installed. In addition, in the factory B, a second relay device 52 that relays the host device 3 and the plural printer devices 4 is installed. Further, in the factory B, a second inspection device 62 that inspects the state of the printed cans is installed.

Note that, in the description of the exemplary disclosure, when the first printer device 41 to the sixth printer device 46 are not particularly distinguished, the printer devices are collectively referred to as "printer devices 4." Similarly, when the first relay device 51 and the second relay device 52 are not particularly distinguished, the devices are collectively referred to as "relay devices 5." Further, when the first inspection device 61 and the second inspection device 62 are not particularly distinguished, the devices are collectively referred to as "inspection devices 6."

Further, in the exemplary disclosure, the can body is a cylindrical container made of metal. Moreover, as the material of the can body, metals such as aluminum, an aluminum alloy, steel and the like can be used.

### [Client device 2]

Examples of the client device 2 can include a terminal device (a personal computer, a tablet, a mobile terminal or the like) in a company or the like to which the printed cans are to be delivered. In this case, for example, the client device 2 is operated by a user, such as an orderer who places an order of printing on the can bodies.

Then, the client device 2 transmits a design image created by the user to the host device 3 via a network. The design image is to be printed on a side surface portion (whole circumference) of a can body. Note that the design image is configured with a data format created by, for example, general-purpose software.

Moreover, the client device 2 transmits production information related to placement of order of the printed cans to the host device 3 via the network. Here, the production information includes production planning information related to production planning, the design image, color change information, and so on. In particular, the production planning information includes, per each design image, information of the planned total number, which is the total number of the printed cans to be delivered desired by the user, and information related to conditions of the print surface about whether to print on a base material surface or a coated surface of a can body. Further, the production planning information includes various types of information related to production of the printed cans, such as information about time, such as a delivery date, information about a location, such as a delivery destination, identification information of mass-produced products or prototypes, and so on.

Moreover, the client device 2 is capable of displaying a sample image, which will be described later, obtained from the host device 3 on a screen. Further, the client device 2 accepts the color change information related to change of color in the sample image. Then, the client device 2 is capable of transmitting the color change information to the host device 3.

### [Host device 3]

Next, the host device 3 will be described in detail.

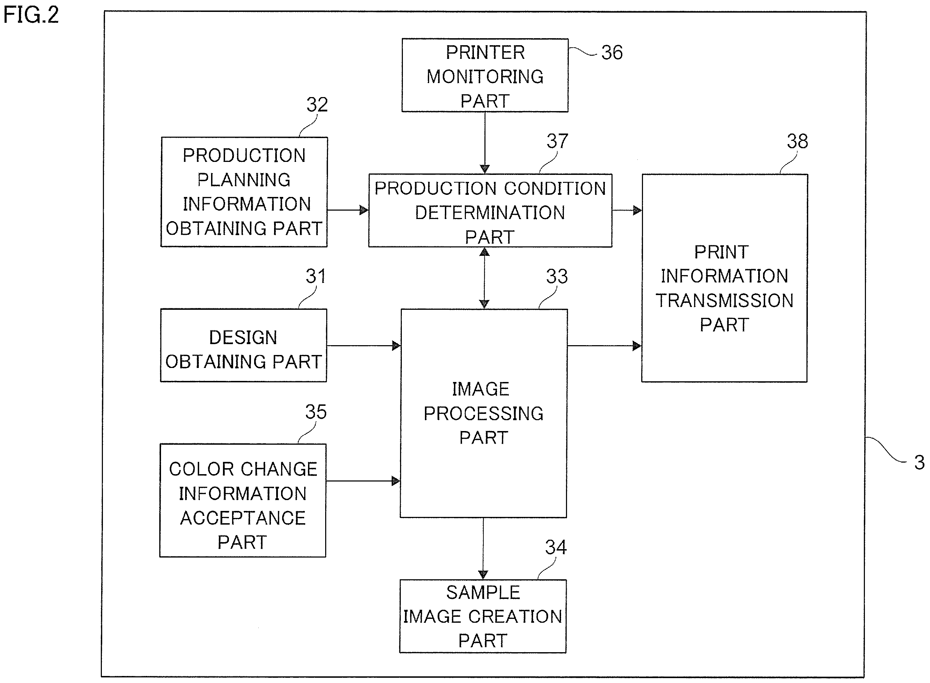

FIG. 2 is a functional block diagram of the host device 3 of the exemplary disclosure.

The host device 3 includes: a design obtaining part 31 that obtains a design image; a production planning information obtaining part 32 that obtains the production planning information; and an image processing part 33 (an example of a creation unit) that performs image processing on the design image. Moreover, the host device 3 includes: a sample image creation part 34 that creates a sample image based on the design image; and a color change information acceptance part 35 that accepts an instruction related to change of color in the sample image by the user. Further, the host device 3 includes: a printer monitoring part 36 that monitors the states of the plural printer devices 4; a production condition determination part 37 that determines production conditions of the printed cans; and a print information transmission part 38 (an example of a transmission unit) that transmits instructions related to printing to the relay device 5.

The design obtaining part 31 obtains the design image from the client device 2. Then, the design obtaining part 31 transfers the obtained design image to the image processing part 33.

The planning information obtaining part 32 obtains production planning information associated with each design image from the client device 2. Then, the planning information obtaining part 32 transfers the obtained production planning information to the production condition determination part 37.

The image processing part 33 performs predetermined image processing related to colors in the design image obtained from the design obtaining part 31. Moreover, the image processing part 33 obtains the production planning information from the planning information obtaining part 32.

Then, the image processing part 33 creates print image data based on the design image, the print image data being in a format required to perform printing by the printer device 4. The format of the print image data may be sufficient if the format can be handled by the printer device 4 or the relay device 5, and various types of formats, including, for example, the PDL (page description language) can be used. Then, the image processing part 33 transfers the created print image data to the print information transmission part 38 and the sample image creation part 34.

As will be described later, in the printer device 4 of the exemplary disclosure, inks of four colors, cyan (C), magenta (M), yellow (Y) and black (K) are used as basic inks. Consequently, as the image processing, the image processing part 33 performs color separation of the design image corresponding to the inks of four colors. Further, the image processing part 33 performs, as the image processing, tone adjustment or density adjustment based on predetermined conditions for each color.

Moreover, in the exemplary disclosure, the image processing part 33 performs the color separation, the tone adjustment and the density adjustment in accordance with conditions of the surface of the unprinted can. For example, in the case where the inkjet printing is to be performed on an aluminum can, it is assumed that the surface of the unprinted can is a base material surface of aluminum, or a coated surface that is the base material surface coated with base coating, such as white coating, colored coating or transparent and colorless coating. Consequently, the image processing part 33 of the exemplary disclosure performs, as the image processing, the color separation, the tone adjustment and the density adjustment depending on whether the surface of the unprinted can is the base material surface or the coated surface so that optimum colors appear in the design on the printed can.

The sample image creation part 34 creates a sample image based on the print image data obtained from the image processing part 33, the sample image being available for inspection by the user with the client device 2. Then, the sample image creation part 34 transmits the created sample image to the client device 2.

Even in the case where inkjet printing is performed by use of a certain design image in a similar manner, depending on the conditions of the surface of the unprinted can, appearance of colors of the design on the printed can changes significantly. Therefore, in the exemplary disclosure, the sample image creation part 34 creates the sample image by use of the print image data resulting from application of the image processing on the design image. Further, the sample image creation part 34 allows the user to confirm the sample image, which is an image in the case where the inkjet printing has been performed on the base material surface or the coated surface based on the print image data.

The color change information acceptance part 35 accepts color change information for the sample image from the client device 2. Then, the color change information acceptance part 35 transfers the color change information to the image processing part 33.

In the case where the user confirms the sample image created by the sample image creation part 34, it is assumed that the user desires to change colors, for example, to make the colors brighter or glossier than those of the current sample image. Therefore, in the exemplary disclosure, the color change information acceptance part 35 is enabled to accept change of colors of the sample image from the user.

Then, the color change information acceptance part 35 transmits the color change information accepted from the client device 2 to the sample image creation part 34. Note that, in the sample image creation part 34, a sample image is created anew based on the obtained color change information, and the updated sample image is transmitted to the client device 2 again.

In the exemplary disclosure, as described above, color change (adjustment) operation consistent with the user's wish is performed via the sample image based on the design image. Then, when the color change operation on the design image by the user is completed, the color change information acceptance part 35 transmits the color change information that has been finally determined to the image processing part 33.

Note that, even in the case where the sample image creation part 34 is provided, if the user does not especially desire to change colors of the sample image, the print image data is created without reflecting user's color change by use of the sample image.

Moreover, the configurations of the sample image creation part 34 and the color change information acceptance part 35 are not essential. In the case where the sample image creation part 34 is not provided, the print image data is created without reflecting user's color change by use of the sample image.

The printer monitoring part 36 obtains monitoring information, which will be described later, from the relay device 5. The monitoring information includes various types of information related to the plural printer devices 4. The printer monitoring part 36 can grasp, for example, availability of the printer devices 4, breakdown and/or error information of the printer devices 4, and so forth, in each factory.

Note that, in the exemplary disclosure, the printer monitoring part 36 also transmits the obtained monitoring information to the client device 2.

The production condition determination part 37 determines the production conditions of the printed can for each relay device 5 (each factory) based on the production planning information and the monitoring information. Then, the production condition determination part 37 transmits production condition information, which is information related to production conditions, to the print information transmission part 38.

Specifically, the production condition determination part 37 allocates a predetermined number of the planned total number to each relay device 5 (each factory) to achieve production of the planned total number of the printed cans. Then, the production condition determination part 37 creates, as the production condition information, information related to the production number of the printed cans allocated to each relay device 5 (each factory) (hereinafter, referred to as the allocated number). Moreover, the production condition determination part 37 also creates, as the production condition information, due information indicating until when production of printed cans of the predetermined allocated number should be completed in each relay device 5 (each factory).

For example, in the case where the factory A is nearer than the factory B as the delivery destination of the printed cans, the production condition determination part 37 creates the production condition information that allocates all of the planned total number to the factory A. Moreover, as another example, in the case where there is no particular constraints on the distance to the delivery destination and the delivery date takes priority, the production condition determination part 37 appropriately distributes the predetermined number of the planned total number to each of the factory A and the factory B as the allocated number, to thereby create the production condition information. Further, for example, in the case where the factory A has relatively less availability of production of the printed cans and the factory B has enough ability to produce the printed cans, the production condition determination part 37 creates the production condition information with the allocated number to the factory B that is larger than the allocated number to the factory A.

Further, in the event of a breakdown of at least one printer device 4, the printer monitoring part 36 obtains the monitoring information (including the breakdown information) via the relay device 5. Next, the production condition determination part 37 sets the optimum production conditions based on the monitoring information, and thereby the production condition determination part 37 is enabled to assign print jobs to the printer devices 4 that are not broken down.

As described above, in the can body printing system of the exemplary disclosure, the host device 3 (the production condition determination part 37) divides the print jobs to each of the relay devices 5 (the printer devices 4 in each factory).

The print information transmission part 38 creates print instruction information for the plural printer devices 4. Then, the print information transmission part 38 transmits the created print instruction information to each of the first relay device 51 and the second relay device 52.

The print instruction information includes the print image data used in the printer device 4 and the production condition information associated with the print image data. Then, of the print instruction information corresponding to a certain design image, the contents of the production condition information are different as to each of the relay devices 5 (each of the factories) in some cases. Then, of the print instruction information corresponding to a certain design image, the print image data has the same contents irrespective of the relay devices 5 (the factories).

The host device 3 configured as described above transmits the print instruction information to each of the plural different relay devices 5. Further, based on the received print instruction information, each relay device 5 causes the printer devices 4 connected with the relay device 5 to perform inkjet printing onto the unprinted cans.

Then, in the exemplary disclosure, as described above, the host device 3 (the image processing part 33) collectively creates the print image data. Consequently, for example, as compared to the case where each of the plural different relay devices 5 (the factories) obtains the design image from the client device 2 and each of the relay devices 5 (the factories) independently creates the print image data, variations in colors of the printed cans are prevented from occurring in each factory.

### [Printer device 4]

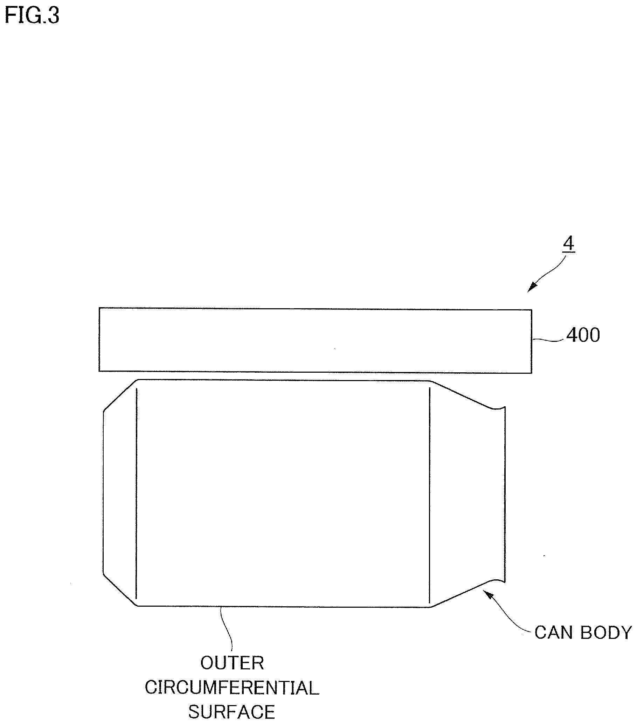

FIG. 3 is an illustration diagram of the printer device 4 of Exemplary disclosure 1.

The printer device 4 performs so-called digital printing based on the print image data obtained from the relay device 5 (the host device 3).

Moreover, the printer device 4 transmits the monitoring information to the relay device 5 at predetermined timing. Here, the monitoring information includes information related to the state of the printer device 4, such as the remaining amount of ink, breakdown and/or error of the printer device 4.

Further, the printer device 4 is provided with an inkjet head 400. The inkjet head 400 in the exemplary disclosure ejects ink toward a can body positioned below the inkjet head 400, to thereby perform printing onto an outer circumferential surface of the can body. To put it another way, the printer device 4 of the exemplary disclosure performs image formation onto the can body by a non-contact image forming method.

Further, in the image forming process in the printer device 4, after the image formation performed by the inkjet head 400, a paint is applied to the outer circumferential surface of the can body to form a protection layer (an overcoat layer).

To put it another way, in the printing process in the printer device 4, the ink is injected as droplets from a nozzle and adheres to the outer circumferential surface of the can body to form an image on the outer circumferential surface of the can body, and further, the paint is applied onto the image to form the protection layer.

Here, the printer device 4 uses, for example, the inks of four colors, cyan (C), magenta (M), yellow (Y) and black (K) as the basic inks. Note that, in the printer device 4, an ink of special color (special color ink) prepared for a specific design image may be used as needed.

Moreover, in the printer device 4, the inkjet head 400 is prepared for each of the above-described colors, to thereby perform image formation onto the can body by use of the plural inkjet heads 400.

Note that, as the ink used in the printer device 4, it is desirable to use an actinic radiation cure ink. Here, the actinic radiation cure ink includes, for example, an ultraviolet (UV) cure ink.

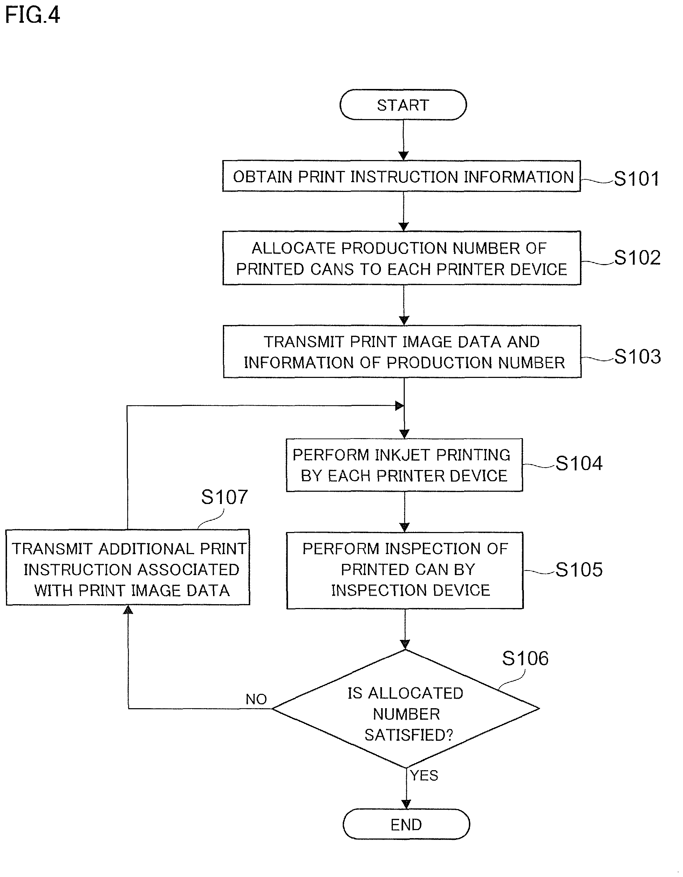

Further, in the printer device 4, a cylindrical mandrel (not shown in FIG. 4), which is an example of a support member, is inserted to support the can body from the inside thereof, and thereafter, printing onto the can body is performed. Further, at this time, the mandrel is rotated in the circumferential direction, to thereby rotate the can body in the circumferential direction.

Here, it is more preferable that the resolution in the printer device 4 is high; however, considering the costs, productivity and so forth, it is preferable to set the resolution at, for example, about 600 dpi.

Moreover, from the standpoint of improving the quality of the image to be formed, it is more preferable to reduce the distance between the can body and the inkjet head 400; however, if the distance is too short, there is a possibility that the can body and the inkjet head 400 interfere with each other. The separation distance between the can body and the inkjet head 400 can be set at, for example, about 1 mm.

Moreover, the larger number of rotations of the can body contributes to the productivity; however, if the number of rotations is excessively large, when the ink arrives at the can body, there is a possibility that the ink spreads in the circumferential direction of the can body, to thereby reduce the resolution. Therefore, it is desirable to rotate the can body at the number of rotations capable of suppressing the spread of the ink in the circumferential direction of the can body, while increasing the number of rotations.

Moreover, in the case where the ultraviolet cure ink is used, it may be possible that, every time the ink of a single color is ejected to the can body, the ultraviolet light is applied to the ink to cure thereof, or it may be possible that, after the inks of plural colors are ejected, the ultraviolet light is applied to the inks to collectively cure thereof.

Note that, in the printer device 4, it is preferable to use a mandrel having a part thereof the diameter of which is expanded when the mandrel is inserted into a can body. To put it another way, it is preferable to use a mandrel, a part of which is expanded after being inserted into the can body, the part being brought into contact with an inner circumferential surface of the can body. To additionally describe, it is preferable to use a mandrel including a portion approaching the inner circumferential surface of the can body from a location separated from the inner circumferential surface to contact thereof.

### [Relay device 5]

The relay device 5 manages the plural printer devices 4 in each factory based on the print instruction information obtained from the host device 3. Based on the print instruction information (the print image data and the production condition information) obtained from the host device 3, the relay device 5 determines which ones of the plural printer devices 4 to be used. Then, the relay device 5 causes each of the printer devices 4 to perform printing of the predetermined number for each print image data.

Moreover, the relay device 5 transmits the print image data to the inspection device 6 for causing the inspection device 6 to inspect defects in printing.

Further, the relay device 5 obtains information related to the production number of the printed cans from the inspection device 6. Consequently, the relay device 5 grasps the production number of the printed cans actually printed based on certain print image data in each factory.

Note that the relay device 5 may directly obtain the information related to the production number of the printed cans from the printer devices 4.

Moreover, the relay device 5 obtains information of the number of printed cans having defects in printing from the inspection device 6. Then, in accordance with the number of defective printed cans, the relay device 5 transmits an instruction of additional printing based on the print image data to the printer devices 4.

Then, the relay device 5 transmits monitoring information related to the printer devices 4 and the printed cans printed by the printer devices 4 to the host device 3.

The monitoring information includes, for example, in the case of the first relay device 51, information related to the state of implementation of jobs, such as the allocated number of the printed cans for each of the first printer device 41 to the third printer device 43. Moreover, the monitoring information includes information related to the state of each printer device 4, such as the remaining amount of ink, breakdown and/or error of the printer device 4.

Moreover, the monitoring information includes the production number of the printed cans of each of the design images, the number of defective printed cans, and so on.

### [Inspection device 6]

The inspection device 6 sequentially inspects the state of printing on the plural printed cans printed by the plural printer devices 4. In the exemplary disclosure, for example, the first inspection device 61 collectively inspects the printed cans printed by each of the first printer device 41, the second printer device 42 and the third printer device 43.

Specifically, the inspection device 6 reads the surface of the printed can while rotating the printed can, and inspects the state of printing on the side surface portion of the printed can. The inspection device 6 has obtained the print image data from the host device 3 via the relay device 5. Then, the inspection device 6 compares the read image data having been read from the printed can with the print image data. Then, in the case where the read image data does not correspond to the print image data, such as, for example, a lack in the print image in a part of a printed can, it is determined that printing defects occur in the concerned printed can. Then, the inspection device 6 transmits error information indicating how many defects occur in the printed cans corresponding to the print image data to the relay device 5.

Moreover, in the plural printed cans sequentially conveyed to the inspection device 6, images printed on the printed cans are different among the plural printed cans in some cases.

In the printing system of the exemplary disclosure, printing is performed on the unprinted can by use of the printer devices 4 to perform inkjet printing, which is digital printing. Consequently, different from, for example, a system that prints the same image, by use of a predetermined plate, across the board on the unprinted cans being conveyed, there are some cases in which different images are sequentially printed on the unprinted cans that are continuously conveyed. As an example, a case can be provided in which different designs are printed on different unprinted cans corresponding to plural players constituting a sports team, respectively.

In the above-described case, the inspection device 6 has obtained plural types of print image data in advance. Then, the inspection device 6 creates read image data of the printed cans sequentially conveyed to the inspection device 6. Then, the inspection device 6 identifies, from the plural types of print image data stored in advance, an item of print image data corresponding to the read image data. Then, the inspection device 6 detects the printing defects based on the read image data and the identified item of print image data.

Note that, in the case where identification information enabling to identify the print image data (for example, bar code, a symbol formed on an end portion of a printed can, or the like) is formed on the printed can, each of the printed cans sequentially conveyed to the inspection device 6 is rotated at least once, and thereby the identification information thereof is obtained. Then, the inspection device 6 identifies a specific item of the print image data based on the identification information, and detects the printing defects based on the read image data and the identified item of the print image data.

Subsequently, a specific production flow in each factory will be described. In the following, description will be given of a case of producing a predetermined allocated number of printed cans with a specific design image in the factory A.

FIG. 4 is a production flowchart of the printed cans in each factory.

First, in the factory A, the first relay device 51 obtains the print instruction information including the print image data corresponding to a specific design image (S101).

Then, the first relay device 51 allocates the production number of the printed cans to each of the first printer device 41, the second printer device 42 and the third printer device 43 (S102). The first relay device 51 transmits the print image data and the information related to the production number of the printed cans to the first printer device 41, the second printer device 42 and the third printer device 43 (S103).

Thereafter, each of the first printer device 41, the second printer device 42 and the third printer device 43 performs inkjet printing onto the unprinted cans (S104).

Moreover, the first inspection device 61 inspects printing on the printed cans performed by each of the printer devices 4 (S105). In the case where printed cans having defects are detected, the first inspection device 61 transmits the number of printed cans having defects to the first relay device 51.

Then, the first relay device 51 determines whether or not the number of printed cans calculated by subtracting the number of printed cans having defects from the number of the printed cans printed by the printer device 4 satisfies the predetermined allocated number (S106).

If the number obtained by subtraction satisfies the predetermined allocated number (YES in S106), the printing by the printer device 4 based on the specific print image data is finished.

On the other hand, if the number obtained by subtraction does not satisfy the predetermined allocated number (NO in S106), an additional print instruction is sent to any of the first printer device 41, the second printer device 42 and the third printer device 43 (S107). Thereafter, by the additional print instruction, the predetermined allocated number is finally achieved, and thereby the printing by the printer devices 4 based on the specific image data is finished.

### < Exemplary embodiment 2>

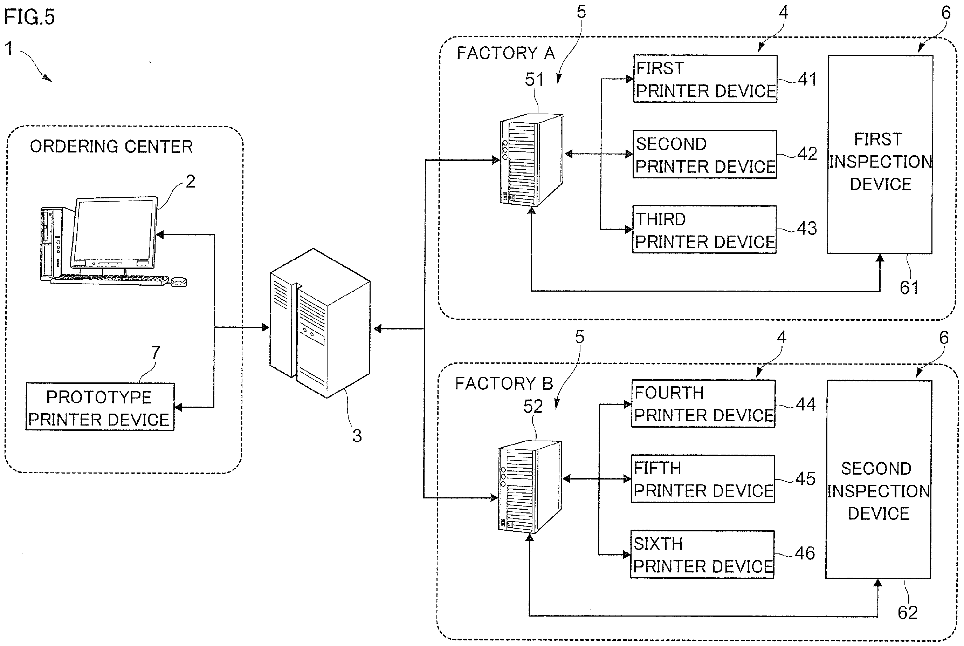

FIG. 5 is an overall view of the can body printing system 1 of Exemplary embodiment 2.

Subsequently, the printing system of the Exemplary embodiment 2 will be described. Note that, in Exemplary embodiment 2, configurations similar to those in Exemplary disclosure 1 are assigned with same reference signs, and detailed descriptions thereof will be omitted.

In Exemplary embodiment 2, it is assumed that the orderer goes to an ordering center, and while actually watching a prototype, creates the print image data.

As the ordering center, the client device 2 and a prototype printer device 7 are set in the same place. The other configurations are the same as those of the exemplary disclosure.

The orderer brings, for example, a design image into the ordering center and actually performs printing by the prototype printer device 7. Note that the prototype printer device 7 has the same or similar specification as the printer device 4 provided to each factory.

In the can body printing system 1 of Exemplary embodiment 2, the design image is transmitted from the client device 2 to the host device 3. The host device 3 creates the print image data based on the obtained design image. Further, the prototype printer device 7 performs inkjet printing on the unprinted can based on the print image data obtained from the host device 3.

In Exemplary embodiment 2, the orderer can confirm a printed can printed by the prototype printer device 7 immediately and directly.

Note that, in the case where the colors of the printed can are different from the wishes of the orderer, the orderer performs operations to change the print image data via the client device 2.

Finally, the fixed print image data is transmitted from the host device 3 to the relay device 5 in each factory.

As described above, the user can directly confirm the printed can that has been printed under the same conditions as the case where printing is performed in the factory. Then, in each factory, by use of the print image data created based on the details confirmed by the orderer, a great deal of printing onto the unprinted cans is performed. Therefore, in Exemplary embodiment 2, particularly, the state in which the printed cans with colors different from the user's wishes are produced in actuality hardly occur.

Finally, a hardware configuration of the host device 3 in Exemplary disclosure 1 and Exemplary embodiment 2 will be described.

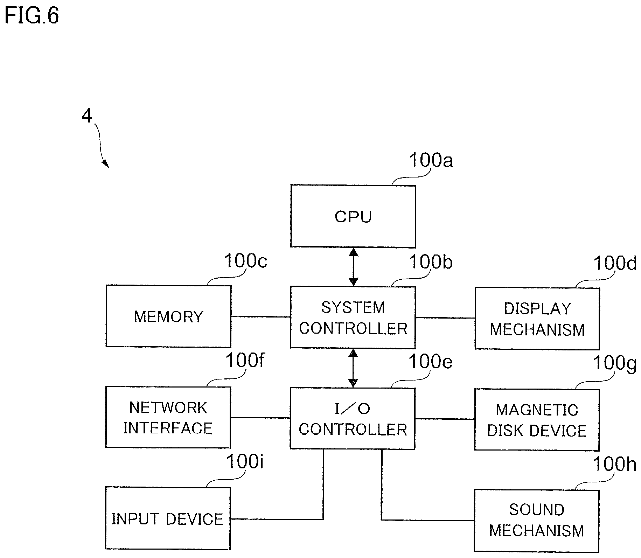

FIG. 6 is a diagram showing an example of a hardware configuration of a computer to which the host device 3 is suitably applied.

As shown in FIG. 6, the host device 3 includes a CPU (Central Processing Unit) 100a as a computation unit and a memory 100c as a main storage unit. Moreover, as external devices, a magnetic disk device (HDD: Hard Disk Device) 100g, a network interface 100f, a display mechanism 100d including a display device, a sound mechanism 100h, an input device 100i, such as a keyboard or a mouse, and so forth are provided.

In the configuration example shown in FIG. 6, the memory 100c and the display mechanism 100d are connected to the CPU 100a via a system controller 100b. Moreover, the network interface 100f, the magnetic disk device 100g, the sound mechanism 100h and the input device 100i are connected to the system controller 100b via an I/O controller 100e. Each constituent is connected by various types of buses, such as a system bus or an input/output bus.

Moreover, in FIG. 6, the magnetic disk device 100g stores OS programs or application programs. These programs are read into the memory 100c and implemented by the CPU 100a, and thereby functions of each functional part of the host device 3 related to the exemplary disclosure are realized.

Note that the programs causing a computer to implement the above-described functions in the above host device 3 may be provided by being stored in various types of recording media (for example, a USB (Universal Serial Bus) memory, an EEPROM (Electrically Erasable and Programmable ROM), and so forth), as well as using the communication unit, for example.

Note that, in Exemplary disclosure 1 and Exemplary embodiment 2, the host device 3 creates the sample image based on the design image and transmits the created sample image to the client device 2; however, the present invention is not limited to the mode. For example, application software may be provided in the client device 2 in advance, the application software being capable of displaying a sample image taking the color separation, the tone adjustment or the density adjustment into account based on the fact that inkjet printing of the design image is to be performed on the base material surface or the coated surface. Then, the color change information of the sample image by the user may be transmitted to the host device 3 together with the design image.

Note that, in the can body printing system 1 of Exemplary disclosure 1 and Exemplary embodiment 2, the configuration with the relay device 5 is adopted; however, the relay device 5 is not necessarily provided. In the case where the relay device 5 is not provided, it is acceptable that the host device 3 manages the plural printer devices 4 in each factory, or manages the plural printer devices 4 over the plural factories.

Moreover, in the printing system 1 in the exemplary disclosure and Exemplary embodiment 2, the plural printer devices 4 are provided for each relay device 5 (each factory); however, only a single printer device 4 may be provided in each factory.

Moreover, in Exemplary disclosure 1 and Exemplary embodiment 2, the host device 3 may be installed in the factory A or the factory B.

### Reference Signs List

1 Printing system
2 Client device
3 Host device
4 Printer device
5 Relay device
6 Inspection device
7 Prototype printer device

## Claims

1. A can body printing system (1) comprising:
a plurality of printing devices (4) installed in different locations, each performing printing on a can body by inkjet printing;
a management device (3) managing the plurality of printing devices (4); and
a client device (2) and a prototype printer device (7) both set at an ordering center,
wherein
a design image from an orderer in the ordering center is transmitted from the client device (2) to the management device (3),
the management device (3) performs image processing on the obtained design image to be printed on the can body and creates print image data to be used in the plurality of printing devices (4), and
the prototype printer device (7) performs inkjet printing on an unprinted can based on the print image data created by the management device (3).

2. The can body printing system (1) according to claim 1, wherein the management device (3) performs image processing about colors for printing the design image on a base material surface of the can body or a coated surface obtained by performing a predetermined surface treatment on the base material surface of the can body.

3. The can body printing system (1) according to claim 1, wherein the management device (3) creates information about the number of can bodies to be printed by the plurality of printing devices (4).

4. The can body printing system (1) according to claim 1, further comprising:
a plurality of relay devices (5) provided in the respective different locations, each of the relay devices (5) relaying the management device (3) to the printing device (4).

5. The can body printing system (1) according to claim 4, wherein the relay device (5) obtains information about the number of can bodies having been printed by the printing device (4).

6. The can body printing system (1) according to claim 1, further comprising:
an inspection device (6) inspecting a state of printing on a printed can printed by the printing device (4),
wherein the inspection device (6) obtains the print image data.

7. The can body printing system (1) according to claim 6, further comprising:
a plurality of relay devices (5) provided in the respective different locations, each of the relay devices (5) relaying the management device (3) to the printing device (4),
wherein the inspection device (6) identifies the number of printed cans with printing defects based on read image data obtained by reading the printed can and the print image data, and transmits information about the identified number of printed cans to the relay device (5).

8. The can body printing system (1) according to claim 1, wherein the management device (3) transmits a sample image in a case where the design image is printed on a can body to the client device (2).

9. The can body printing system (1) according to claim 8, wherein the management device (3) obtains information about color change of the sample image from the client device (2).

## Patentansprüche

1. System zum Bedrucken von Dosenkörpern (1), umfassend:
mehrere Druckvorrichtungen (4), die an verschiedenen Stellen installiert sind und jeweils einen Dosenkörper durch Tintenstrahldruck bedrucken;
eine Verwaltungsvorrichtung (3), die die mehreren Druckvorrichtungen (4) verwaltet; und
eine Client-Vorrichtung (2) und eine Prototyp-Druckvorrichtung (7), die beide in einem Bestellzentrum aufgestellt sind,
wobei
ein Designbild eines Bestellers in dem Bestellzentrum von der Client-Vorrichtung (2) an die Verwaltungsvorrichtung (3) übertragen wird,
die Verwaltungsvorrichtung (3) eine Bildverarbeitung an dem erhaltenen, auf den Dosenkörper zu druckenden Designbild durchführt und Druckbilddaten erzeugt, die in den mehreren Druckvorrichtungen (4) zu verwenden sind, und
die Prototyp-Druckvorrichtung (7) einen Tintenstrahldruck auf einer unbedruckten Dose auf der Grundlage der von der Verwaltungsvorrichtung (3) erzeugten Druckbilddaten durchführt.

2. System zum Bedrucken von Dosenkörpern (1) nach Anspruch 1, wobei die Verwaltungsvorrichtung (3) eine Bildverarbeitung in Bezug auf Farben durchführt, um das Designbild auf eine Grundmaterialoberfläche des Dosenkörpers oder eine beschichtete Oberfläche zu drucken, die durch Durchführen einer vorbestimmten Oberflächenbehandlung auf der Grundmaterialoberfläche des Dosenkörpers erhalten wird.

3. System zum Bedrucken von Dosenkörpern (1) nach Anspruch 1, wobei die Verwaltungsvorrichtung (3) Informationen über die Anzahl der von den mehreren Druckvorrichtungen (4) zu bedruckenden Dosenkörper erzeugt.

4. System zum Bedrucken von Dosenkörpern (1) nach Anspruch 1, das ferner umfasst:
mehrere Vermittlungsvorrichtungen (5), die an den jeweiligen verschiedenen Orten vorgesehen sind, wobei jede der Vermittlungsvorrichtungen (5) die Verwaltungsvorrichtung (3) an die Druckvorrichtung (4) vermittelt.

5. System zum Bedrucken von Dosenkörpern (1) nach Anspruch 4, wobei die Vermittlungseinrichtung (5) Informationen über die Anzahl der Dosenkörper erhält, die von der Druckeinrichtung (4) bedruckt wurden.

6. System zum Bedrucken von Dosenkörpern (1) nach Anspruch 1, das ferner umfasst:
eine Inspektionsvorrichtung (6), die einen Druckzustand auf einer von der Druckvorrichtung (4) bedruckten Dose überprüft,
wobei die Inspektionsvorrichtung (6) die Druckbilddaten erhält.

7. System zum Bedrucken von Dosenkörpern (1) nach Anspruch 6, das ferner umfasst:
mehrere Vermittlungsvorrichtungen (5), die an den jeweiligen verschiedenen Orten vorgesehen sind, wobei jede der Vermittlungsvorrichtungen (5) die Verwaltungsvorrichtung (3) an die Druckvorrichtung (4) vermittelt,
wobei die Inspektionsvorrichtung (6) die Anzahl der bedruckten Dosen mit Druckfehlern auf der Grundlage von Lesebilddaten, die durch Lesen der bedruckten Dose erhalten wurden, und der Druckbilddaten identifiziert und Informationen über die identifizierte Anzahl von bedruckten Dosen an die Vermittlungsvorrichtung (5) überträgt.

8. System zum Bedrucken von Dosenkörpern (1) nach Anspruch 1, wobei die Verwaltungsvorrichtung (3) ein Musterbild in einem Fall, in dem das Designbild auf einen Dosenkörper gedruckt wird, an die Client-Vorrichtung (2) überträgt.

9. System zum Bedrucken von Dosenkörpern (1) nach Anspruch 8, wobei die Verwaltungsvorrichtung (3) Informationen über die Farbänderung des Musterbildes von der Client-Vorrichtung (2) erhält.

## Revendications

1. Système d'impression de corps de boîte (1) comprenant :
une pluralité de dispositifs d'impression (4) installés à différents emplacements, chacun effectuant une impression sur un corps de boîte par impression par jet d'encre ;
un dispositif de gestion (3) gérant la pluralité de dispositifs d'impression (4) ; et
un dispositif client (2) et un dispositif d'imprimante de prototype (7) tous deux disposés au niveau d'un centre de passation de commandes,
dans lequel
une image de conception provenant d'un passeur de commande dans le centre de passation de commandes est transmise du dispositif client (2) au dispositif de gestion (3),
le dispositif de gestion (3) effectue un traitement d'image sur l'image de conception obtenue devant être imprimée sur le corps de boîte et crée des données d'image d'impression devant être utilisées dans la pluralité de dispositifs d'impression (4), et
le dispositif d'imprimante de prototype (7) effectue une impression par jet d'encre sur une boîte non imprimée sur la base des données d'image d'impression créées par le dispositif de gestion (3).

2. Système d'impression de corps de boîte (1) selon la revendication 1, dans lequel le dispositif de gestion (3) effectue un traitement d'image sur des couleurs pour imprimer l'image de conception sur une surface de matériau de base du corps de boîte ou une surface revêtue obtenue en effectuant un traitement de surface prédéterminé sur la surface de matériau de base du corps de boîte.

3. Système d'impression de corps de boîte (1) selon la revendication 1, dans lequel le dispositif de gestion (3) crée des informations sur le nombre de corps de boîte devant être imprimés par la pluralité de dispositifs d'impression (4).

4. Système d'impression de corps de boîte (1) selon la revendication 1, comprenant en outre :
une pluralité de dispositifs de relais (5) prévus aux différents emplacements respectifs, chacun des dispositifs de relais (5) relayant le dispositif de gestion (3) au dispositif d'impression (4).

5. Système d'impression de corps de boîte (1) selon la revendication 4, dans lequel le dispositif de relais (5) obtient des informations sur le nombre de corps de boîte ayant été imprimés par le dispositif d'impression (4).

6. Système d'impression de corps de boîte (1) selon la revendication 1, comprenant en outre :
un dispositif d'inspection (6) inspectant un état d'une impression sur une boîte imprimée, imprimée par le dispositif d'impression (4),
dans lequel le dispositif d'inspection (6) obtient les données d'image d'impression.

7. Système d'impression de corps de boîte (1) selon la revendication 6, comprenant en outre :
une pluralité de dispositifs de relais (5) prévus aux différents emplacements respectifs, chacun des dispositifs de relais (5) relayant le dispositif de gestion (3) au dispositif d'impression (4),
dans lequel le dispositif d'inspection (6) identifie le nombre de boîtes imprimées présentant des défauts d'impression sur la base de données d'image lues obtenues par lecture de la boîte imprimée et des données d'image d'impression, et transmet des informations sur le nombre identifié de boîtes imprimées au dispositif de relais (5).

8. Système d'impression de corps de boîte (1) selon la revendication 1, dans lequel le dispositif de gestion (3) transmet une image échantillon dans un cas où l'image de conception est imprimée sur un corps de boîte au dispositif client (2).

9. Système d'impression de corps de boîte (1) selon la revendication 8, dans lequel le dispositif de gestion (3) obtient des informations sur un changement de couleur de l'image échantillon en provenance du dispositif client (2).
